# EUROPEAN PATENT APPLICATION

(11) **EP 4 818 052 A1**
(43) Date of publication of application: **07.10.2026**
(21) Application number: 26169494.7
(22) Date of filing: 31.03.2026
(51) Int. Cl.: B64G 1/64, B25J 15/00, B64G 4/00

(54) **SYSTEM, METHOD, AND APPARATUS FOR A SEPARABLE ROBOTIC INTERFACE**

(30) Priority: 31.03.2025 US 202563781124 P
(71) Applicant: MacDonald, Dettwiler and Associates Inc., Brampton, Ontario L6Y 6K7 (CA)
(72) Inventor: EDWARDS, John Duncan, Brampton, L6Y 6K7 (CA); BASSALIOUS, Mina, Brampton, L6Y 6K7 (CA); JOVANOVIC, Nebojsa, Brampton, L6Y 6K7 (CA); NARRA, Bala Krishna, Brampton, L6Y 6K7 (CA)
(74) Representative: Worsley, Theo Morgan

(57) **Abstract**

A system and method for capturing a grapple fixture as part of a separable robotic interface is provided. The system includes: a probe capture system for grappling a probe (108) of the grapple fixture (104), comprising: an outer nested component (206) and an inner nested component (204) disposed in the outer nested component; a linear actuator (208) that biases the outer and inner nested components apart; jaws (202) for grappling the probe that are configured to pivot between open and closed positions; a jaw actuation mechanism including at least one boss (216) on each jaw and a mating slot (218) for each boss on the inner nested component; wherein the relative translation of the inner and outer nested components via the linear actuator moves the bosses in the slots, and wherein the movement of the bosses in the slots provides two degrees of freedom to pivot the jaws between the open and closed positions.

## Description

### Technical Field

The following relates generally to separable robotic interfaces, and more particularly to separable robotic interfaces in space environments.

### Introduction

The development of a low mass active robotic interface that operates on the end of a manipulator is a critical element in the advancement of robotic servicing, maintenance, and assembly capabilities, and in particular in space and on-orbit environments. One objective is to limit the mass and volume of the robotic device, while at the same time maximizing the design's load capacity.

More generally, a robotic interface is desired that can enable effective capture of a payload, such as a tool or other object, in a variety of applications and environments, including space and on-orbit applications.

Further, electrical bonding is required across separable robotic interfaces to protect against erosion and electromagnetic interference due to electrostatic discharge in the space environment.

Still further, the use of robotic grappling systems in space environments requires consideration of how best to protect against exposure of sensitive mechanisms and components to foreign object debris and micrometeoroids and orbital debris.

Accordingly, there is a need for an improved system and method for a separable robotic interface that overcomes at least some of the disadvantages of existing systems and methods.

### Summary

A system for capturing a grapple fixture as part of a separable robotic interface is provided. The system includes: a probe capture system for grappling a probe of the grapple fixture, the probe capture system comprising: a pair of concentric nested components including an outer nested component and an inner nested component disposed in the outer nested component; a linear actuator that biases the outer nested component and the inner nested component apart; at least two jaws for grappling the probe, the at least two jaws configured to pivot between open and closed positions; a jaw actuation mechanism including at least one boss on each jaw and a mating slot for each boss on the inner nested component; wherein the relative translation of the inner and outer nested components via the linear actuator moves the bosses in the slots, and wherein the movement of the bosses in the slots provides two degrees of freedom to pivot the jaws between the open and closed positions.

In some embodiments, the system further includes a probe funnel for guiding the probe into the probe capture system. The probe funnel includes an inner probe funnel that retracts with the probe capture system during rigidization of the grapple fixture.

In some embodiments, the at least two jaws are contained behind and entirely within an outer circumference of the inner probe funnel.

In some embodiments, the linear actuator is a spring element.

In some embodiments, the spring element is disposed in the outer nested component.

In some embodiments, the at least one boss is cylindrical.

In some embodiments, the at least one boss comprises a plurality of bosses and the plurality of bosses are coaxial.

In some embodiments, the plurality of bosses are disposed on a single boss axis that is parallel to a jaw pivot axis around which the respective jaw pivots.

In some embodiments, the system further includes a second linear actuator configured to retract the probe capture system and captured probe along a translation axis to bring a first coupling element on the grapple fixture into contact with a second coupling element on the end effector to form a rigid mechanical connection between the end effector and the grapple fixture.

In some embodiments, the first coupling element includes a first set of protrusions and recesses and the second coupling elements includes a second set of protrusions and recesses. The first and second sets of protrusions and recesses are configured to mate with each other to abut and arrest any rotation between the first and second coupling elements.

In some embodiments, the first and second sets of protrusions and recesses are curved to promote self-alignment of the first and second coupling elements during mating.

In some embodiments, the system further includes at least one pogo pin disposed in a protrusion of the second set of protrusions and recesses and at least one contact pad disposed in a recess of the first set of protrusions and recesses. The pogo pin and the contact pad are configured to form an electrical bond when in contact during mating of the first and second coupling elements.

In some embodiments, the pogo pin is a rolling pogo pin.

In some embodiments, the at least two jaws is at least three jaws that are arranged is a radially symmetrical manner around a volume that the probe enters for capture.

In some embodiments, when the at least three jaws rotate closed, flanks on adjacent jaws abut one another and form a continuous ring.

In some embodiments, the outer nested component controls radial alignment of the at least two jaws, orientation of the at least two jaws in two degrees of freedom, and axial alignment of the at least two jaws.

A system for electrical bonding across a separable robotic interface formed between a first interface component and a second interface component is also provided. The system includes: a first coupling element on the first interface component; a second coupling element on the second interface component; a pogo pin and a contact pad for establishing an electrical bond therebetween; wherein the pogo pin is disposed in the first coupling element and the contact pad is disposed in the second coupling element.

In some embodiments, the first and second coupling elements are circular and the interlocking features are radially disposed around respective peripheries of the coupling elements.

In some embodiments, the interlocking features abut and arrest any rotation between the first and second interface components as well as constraining translation in the closing axial direction and in all radial directions.

In some embodiments, the interlocking features are curved to promote alignment of the first and second coupling elements as the first and second interface components are brought together.

In some embodiments, the first interface component is an end effector and the second interface component is a grapple fixture, or the first interface component is grapple fixture and the second interface component is the end effector.

In some embodiments, the first coupling element includes first interlocking features and the second coupling element includes second interlocking features, the first and second interlocking features configured to mate with each other and constrain relative motion of the first and second interface components, the first and second interlocking features each include protrusions and recesses, and the pogo pin is disposed in one of a protrusion and a recess of the first coupling element and the contact pad is disposed in the corresponding other of a protrusion and a recess of the second coupling element.

In some embodiments, respective surfaces on which the pogo pin and contact pad are disposed are surfaces that do not come into contact during nominal mating of the coupling elements.

A system for capturing a grapple fixture as part of a separable robotic interface is also provided. The system includes: a probe capture system comprising an inner probe funnel and at least two jaws configured to grapple a probe of the grapple fixture, the at least two jaws disposed entirely behind the inner probe funnel; a probe funnel for guiding the probe into the at least two jaws for capture, wherein the probe funnel includes the inner probe funnel and an outer probe funnel surrounding the inner probe funnel, and wherein the inner probe funnel retracts with the probe capture system during rigidization of the grapple fixture and the outer probe funnel does not retract.

In some embodiments, the inner probe funnel and the outer probe funnel form a substantially continuous concave surface when the inner probe funnel is fully forward.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a separable robotic interface system including an end effector and a grapple fixture, according to an embodiment;
Figure 2 is a block diagram of the probe capture mechanism of Figure 1, according to an embodiment;
Figure 3 is a flowchart of a method of establishing a separable robotic interface using the system of Figure 1, according to an embodiment;
Figure 4 is a perspective view of an example of the separable interface system of Figure 1, according to an embodiment;
Figure 5A is a perspective view of the end effector of Figure 4 with the inner probe funnel in a fully forward position, according to an embodiment;
Figure 5B is a perspective view of the end effector of Figure 4 with the inner probe funnel in a retracted position, according to an embodiment;
Figure 6 is a perspective view of the probe capture mechanism of Figure 4, according to an embodiment;
Figure 7 is a perspective view of the jaw cage of Figure 6 in isolation, according to an embodiment;
Figure 8 is a perspective view of the jaw carrier of Figure 6 in isolation, according to an embodiment;
Figure 9 is a perspective view of a single jaw of the probe capture mechanism of Figure 6, according to an embodiment;
Figure 10 is a perspective view of the probe capture mechanism of Figure 6 with the jaw carrier transparent and the jaws in the closed position, according to an embodiment;
Figure 11A is a cross-sectional side view of the end effector of Figure 4 with the jaws open, according to an embodiment;
Figure 11B is a cross-sectional side view of the end effector of Figure 4 with the jaws closed, according to an embodiment;
Figure 12 is a perspective view of an electrical bonding system implemented on the separable robotic interface system of Figure 4, according to an embodiment;
Figure 13 is a flowchart of a method of electrical bonding across a separable robotic interface, according to an embodiment; and

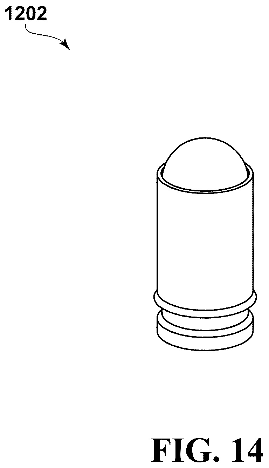

Figure 14 is a perspective view of a rolling pogo pin of the electrical bonding system of Figure 12, according to an embodiment; and
Figure 15 is a front view of the end effector coupling element of Figure 12 with pogo pins for electrical bonding, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

The following relates generally to separable robotic interfaces, and more particularly to separable robotic interfaces in space environments. The following further relates to grappling and electrical bonding in separable robotic interfaces and the protection of grappling components from contaminants.

The present disclosure provides a system and method for capturing a grapple fixture as part of a separable robotic interface. The system includes a grapple system that is disposed in an end effector. The grapple system includes a probe capture mechanism configured to perform "soft capture" of a probe of the grapple fixture, which captivates the probe. The probe capture mechanism is retracted to draw the captured probe further into the end effector to establish a mechanically rigid connection.

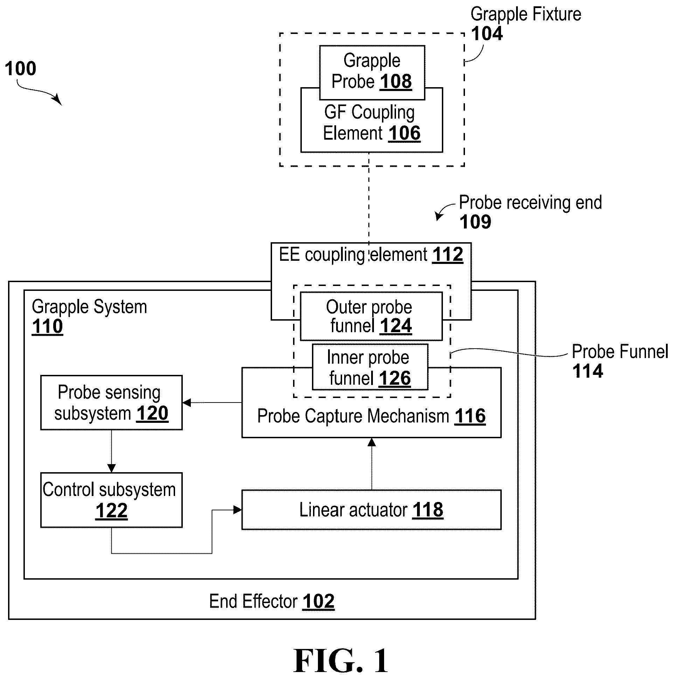

Referring now to Figure 1, shown therein is a separable robotic interface system 100, according to an embodiment.

The system 100 includes an end effector ("EE") 102 and a grapple fixture ("GF") 104.

The end effector 102 may be installed on an end of a robotic arm.

The grapple fixture 104 may be affixed to a payload or tool to allow the payload or tool to be manipulated by a robotic arm to which the end effector 102 is attached.

The system 100 provides a robotically-compatible separable grapple interface between the end effector 102 and the grapple fixture 104. The system 100 is capable of transmitting loads across the arm-to-payload interface. In some cases, services such as electrical data, electrical power, mechanical torque, or fuel may be transmitted across the interface once rigidized.

The grapple fixture 104 supports robotic capture, rigidization, and release by the end effector 110 and transmits structural loads from the end effector 102-grapple fixture 104 interface to the payload.

The grapple fixture 104 includes a coupling element 106 (referred to as "GF coupling element") and a grapple probe 108 connected to the GF coupling element 106. Generally, the coupling element 106 is mounted to a payload and provides a base for the grapple fixture 104. The probe 108 may be oriented such that it is generally perpendicular relative to a flat or planar interface between the coupling element 106 and the payload.

The probe 108 may be sprung relative to the coupling element 106 to provide angular compliance and accommodate radial misalignment between the end effector 102 and the grapple fixture 104. In other embodiments, the probe 108 may be articulated relative to the coupling element 106 rather than sprung, or neither sprung nor articulated.

The probe 108 includes one or more jaw interface features that are used to captivate the probe 108 during capture. In an embodiment, the probe 108 may include a shaft connected to the coupling element 106 and a head or tip at the free end of the shaft with a greater diameter than the shaft. The probe head may be generally hemispherical to provide a rounded edge for contacting the end effector 102 during initial contact and a flat edge used to grab and retain the probe 108 during capture (i.e., the flat edge of the probe head acts as a jaw interface feature). In another embodiment, the probe 108 may include a shaft and one or more jaw interface features that are recessed compared to the diameter of the probe shaft.

The coupling element 106 may include electrical bonding interfaces to the end effector 102 to support equalization of electrostatic potential differences across the grappled end effector-grapple fixture interface. In an embodiment, the electrical bonding interfaces of the grapple fixture 104 include one or more chemical conversion-coated contact pads.

The end effector 102 includes a grapple system 110 for creating a rigid mechanical connection between the end effector 102 and the grapple fixture 104. The grapple system 110 is configured to perform capture, rigidization, de-rigidization, and release functions of the robotic arm. Capture is defined as the process of moving from a fully unconstrained state (where no degrees of freedom are constrained) to a fully constrained state (where all degrees of freedom are constrained). Rigidization is a process that occurs towards the end the capture process and is defined as the process of moving from a mostly constrained state with little or no preload to a constrained state with preload necessary to achieve operational goals. In the rigidized state, the stiffness of the separable interface is predictable and mostly linear with hysteresis. The grapple system 110 captures and draws-in the probe 108 of the grapple fixture 104 to preload the end effector-grapple fixture interface and constrain the payload in six degrees of freedom (6DOF).

The grapple system 110 captures the probe 108 of the grapple fixture 104. Once captured, the grapple system 110 may apply a controlled tension force to the probe 108 to bring GF coupling element 106 into engagement with a coupling element 112 ("EE coupling element") on a front (probe-receiving) end 109 of the grapple system 110. In other cases, the robotic arm may push the end effector 102 towards the grapple fixture 104 to bring the coupling elements 106, 112 into engagement. Once coupled, the grapple system 110 preloads the coupling element pair 106, 112 (compressing the couplings 106, 112 together) so that the interface can transmit loads without separation.

The grapple system 110 includes EE coupling element 112, a probe funnel 114, a probe capture mechanism 116, a linear actuator 118, a state sensing subsystem 120, and a control unit 122. In some embodiments, the control unit 122 may exist separate and apart from the grapple system 110 and/or the end effector 102.

The EE coupling element 112 is disposed at the front end of the end effector 102. The EE coupling element 112 is configured to couple or interlock with the GF coupling element 106. The coupling elements 106, 112 may include complementary sets of interlocking features that are disposed about the circumference of the respective coupling element. The interlocking features may or may not be radially symmetric. The interlocking features may be a set of alternating protrusions and recesses, or crenellations, where protrusions on GF coupling element 106 mate with recesses on EE coupling element 112 and vice versa. The interlocking features on each of the coupling elements 106, 112 include at least two protrusions and at least two recesses. The interacting geometry of the coupling elements 106, 112 provides for robotically-compatible alignment, topological capture, and stiffness when rigidized. The geometry of the interlocking features on the coupling elements 106, 112 cam the interface halves into alignment as they are pulled together by the grapple system 110. Topological capture refers to when the coupling elements 106, 112 are fully kinematically engaged (i.e., the grapple fixture 104 is said to be topologically captured by the end effector 102). The coupling element 106, 112 alignment is coarse when the interface is somewhat separated and refines as the interface is closed. The interlocking features of the coupling elements 106, 112 abut and arrest any rotation between the two halves of the interface as well as constraining translation in the closing axial direction and in all radial directions. The coupling elements 106, 112 alone do not constrain translation in the axial separation direction. When appropriately preloaded, the interface transmits loads in six degrees of freedom without separating.

In an embodiment, the EE coupling element 112 has a set of spring-loaded electrical contact pins (e.g., rolling pogo pins) disposed in and extending out of the protrusions that electrically bond to contact pads disposed in the recesses of the GF coupling element 106.

The probe funnel 114 is a lead-in feature configured to guide the probe 108 of the grapple fixture 104 through a hole in the probe funnel 114 and into a jaw cavity where the probe 108 can be captured by the probe capture mechanism 116. The probe funnel 114 is a concave surface (or surfaces) inside the diameter of the EE coupling element 112. The concave geometry of the probe funnel 114 guides the GF probe 108 into the probe capture mechanism 116 and prevents jamming between the probe 114 and the end effector 102. When the grapple fixture 104 and end effector 102 come together under misalignments, the probe 114 slides along the concave surface of the probe funnel 114 and is led inside the probe capture mechanism 116.

The probe funnel 114 includes an outer probe funnel 124 and an inner probe funnel 126 that together form the concave surface of the probe funnel 114. The inner and outer probe funnels 124, 126 may be truncated cones (frustoconical). In an embodiment, the geometry of the inner and outer probe funnels 124, 126 may include doubly curved surfaces (i.e., not composed of pure truncated cones/frusta with a single curvature).The probe funnel 114 may include blends, lofts, or fillets to make it doubly-curved.

The inner probe funnel 114 includes a central hole through which the probe is received into the probe capture mechanism 116. The inner probe funnel 126 is configured to move forward and retract with the probe capture mechanism 116 along the capture axis during grapple operations. The probe capture mechanism 116 may be contained entirely behind the inner probe funnel 126. Unlike inner probe funnel 126, outer probe funnel 124 is not moveable in this manner and remains stationary during grapple operations. By having the outer and inner probe funnels 124, 126 as separate components, it allows for the full probe funnel 114 to separate into its constituent parts through retraction of the inner probe funnel 126 when the probe funneling function is no longer needed. When the inner probe funnel 126 is fully forward, the inner probe funnel 126 and the outer probe funnel 124 form a generally continuous concave surface for guiding the probe through the central hole and into the probe capture mechanism 116. Having the inner probe funnel 126 and outer probe funnel 124 split in this manner advantageously opens up options for improved/tighter packaging of components of the probe capture mechanism and a lighter assembly. Having inner probe funnel 126 retractable during rigidization may provide advantages such as improving clearance to grapple fixtures, reducing end effector 102 length, and blocking debris from entering the probe capture mechanism 116. Volume made available by the retractable inner probe funnel 126 may be used for other purposes, such as, for example, preload or a force moment sensor, a vision target or fiducial marker, an electrical interface, a seal for liquid fuel transfer, an airlock seal, probe bellows on the grapple fixture 104 for lunar regolith or other debris mitigation.

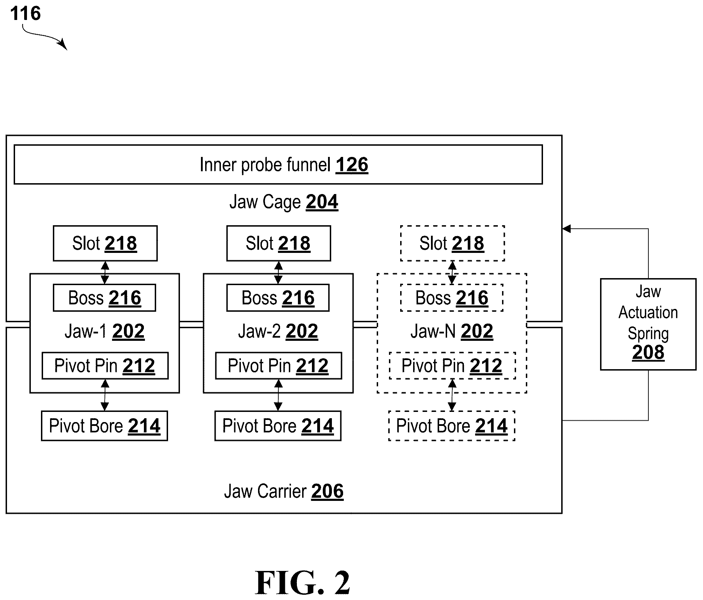

The probe capture mechanism 116 is configured to perform soft capture and release functions (jaw actuation) and to transmit tensile loads developed by the linear actuator 118 to the probe 108. The probe capture mechanism 116 is described in more detail in reference to Figure 2. In some embodiments, such as shown in Figure 2, the probe capture mechanism 116 may be implemented in an unactuated form with as few as four parts. The four parts include a jaw cage, jaw carrier, and two identical jaws. Limiting the part count in this manner may advantageously reduce complexity of the mechanism (and soft capture generally) and reduce mass and volume of the mechanism, which are constraints in the space environment.

The linear actuator 118 is configured to translate the probe capture mechanism 116 in both directions along a capture axis of the probe capture mechanism 116 to enable soft capture, rigidization, and release of the grapple fixture 104. Retraction of the probe capture mechanism 116 along the capture axis by the linear actuator 118 transmits tension to the probe 108. This retraction closes the jaws of the probe capture mechanism 116 and produces the preload to compress the coupling elements 106, 112 together. The linear actuator 118 may be a system configured to convert rotational motion into linear motion, a pure linear actuator (e.g., a shape memory alloy or a wax motor), or other suitable mechanism.

The sensing subsystem 120 provides feedback to the control unit 122 about the relative state of the two halves of the interface. The sensing subsystem 120 senses state information about the probe capture mechanism 116 and transmits signals to the control unit 122 indicating the sensed state. The sensor subsystem 120 may include multiple sensors for detecting different states. States sensed by the sensing subsystem 120 may include, for example, a probe present state, a ready-to-capture state, and a jaws closed state. The sensor subsystem 120 may use state sensing circuits to sense the operational states.

The control unit 122 provides control functionality to the grapple system 110. The control unit 122 is configured to transmit control signals to the linear actuator 118 based on feedback on system state from the sensing subsystem 120.

Referring now to Figure 2, shown therein is the probe capture mechanism 116 in further detail, according to an embodiment.

The probe capture mechanism 116 is configured to capture, release, and apply tensile loads to grapple fixture 104.

The probe capture mechanism 116 includes at least two pivoting jaws 202, a jaw cage 204, a jaw carrier 206, and a jaw actuation spring 208.. The jaws 202 may be identical. The at least two jaws 202 are shown in Figure 2 as Jaw-1 and Jaw-1. An Nth jaw is also shown in dashed lines to represent that additional jaws may be present.

The jaws 202 are radially disposed around the capture axis of the probe capture mechanism 116. The jaws 202 may be radially symmetric or radially asymmetric (e.g., if the probe geometry is designed for radially asymmetric jaws). That is, the jaws 202 may be radially spaced equidistantly from each other around the volume that the probe 108 will enter.

The jaws 202 are actuated by relative translation between the jaw carrier 206 and the jaw cage 204.

The jaws 202 pivot around respective pivot points (e.g., pivot pins 212) that define a jaw pivot axis to reach open and closed positions. In an embodiment, the jaws 202 may rotate approximately 40 degrees between open and closed. The jaws 202 rotate synchronously. The jaws 202 may be normally closed. In the closed position, the jaws 202 captivate the GF probe 108 (and achieve the "soft capture" state). Where the probe 108 has a head, this may include the jaws 202 closing fully around the head. The angular position of the jaws 202 is dictated by the relative separation between the jaw cage 204 and the jaw carrier 206, as described herein.

The jaws 202 each have a geometry that interfaces with one or more jaw interface features on the probe 108 for capture. In an embodiment, the geometry of the jaws 202 is configured to grab a flat side of the head of the GF probe 108 to captivate the probe 108.

Each jaw 202 includes one or more bosses 216. Each boss 216 is cylindrical. Where each jaw 202 includes multiple bosses 216, the bosses 216 on the jaw 202 are coaxial and disposed on a single boss axis that is parallel to the jaw pivot axis of that jaw 202. In an embodiment where each jaw 202 has a single boss 216, the boss 216 may be disposed at a mid-plane of the jaw 202, on a side or flank of the jaw 202, or any other suitable location. In an embodiment where each jaw 202 has multiple bosses 216, the bosses 216 may be disposed on opposing sides or flanks of the jaw 202.

The bosses 216 are used to actuate the jaw 202 open and closed. The bosses 216 are disposed on opposing sides or flanks of the jaw 202. Each boss 216 is configured to slide in a corresponding mating slot 218 on the jaw cage 204.

The jaws 202 may each be manufactured as a single part, with the bosses 216 integrally formed with the main jaw body.

In some embodiments, the jaws 202 may be sized and dimensioned and radially positioned such that adjacent flanks of adjacent jaws abut one another when the jaws 202 are closed to form a continuous ring around the probe 108. The ring interfaces with the flat face and circumference of the head of the probe 108. This may provide increased load-carrying capacity to the jaws 202.

The jaw carrier 206 provides pivot interfaces for the jaws 202. The jaw carrier 206 supports the jaws 202 via jaw pivots 212 in pivot bores 214. The jaw carrier 206 controls the radial alignment of the jaws 202. The jaw carrier 206 may also control orientation of the jaws 202 in 2DOF and axial alignment of the jaws 202.

The jaw cage 204 is nested in the jaw carrier 206. The jaw cage 204 is sprung relative to the jaw carrier 206 via the jaw actuation spring 208. The jaw actuation spring 208 may be an internal spring (e.g., within the jaw carrier 206) or an external spring. Having the jaw actuation spring 208 contained within the probe capture mechanism 116 (e.g., within the jaw carrier 206) may provide packaging advantages that contribute to the overall compactness of the probe capture mechanism 116. The jaw actuation spring 208 controls a relative separation of the jaw cage 204 and jaw carrier 206. When the spring is extended, the jaw cage 204 is forced apart from the jaw carrier 206. When the spring is compressed, the jaw cage 204 and jaw carrier 206 are compressed together. The jaw actuation spring 208 biases the jaw cage 204 apart from the jaw carrier 206 (and towards the probe-receiving end of the probe capture mechanism 116). In an embodiment, the jaw actuation spring is a Belleville spring stack.

In an embodiment, the jaw cage 204 includes a main barrel segment and a funnel segment (inner probe funnel 126). The main barrel segment of the jaw cage 204 is disposed in a main barrel segment of the jaw carrier 206 and the funnel segment is disposed in a bowl segment (hemispherical head) of the jaw carrier 206. The jaw actuation spring 208 is disposed in the main barrel of the jaw carrier 206 and biases the main barrel of the jaw cage 204 towards front end 109.

The jaw cage 204 includes mating slots 218 that interface with the bosses 216 on the jaws 202. The mating slots 218 may be U-shaped. Generally, the bosses 216 and mating slots 218 are configured to provide a two degrees-of-freedom (DOF) actuation feature between the jaws 202 and jaw cage 204 for jaw actuation. This additional DOF in the joint may allow the number, mass, and cost of parts in the probe capture mechanism 116 to be reduced or minimized. Generally, the slots 218 are shaped to cause the jaws 202 to pivot to the open and closed positions as the bosses 216 follow the slots 218 in either direction.

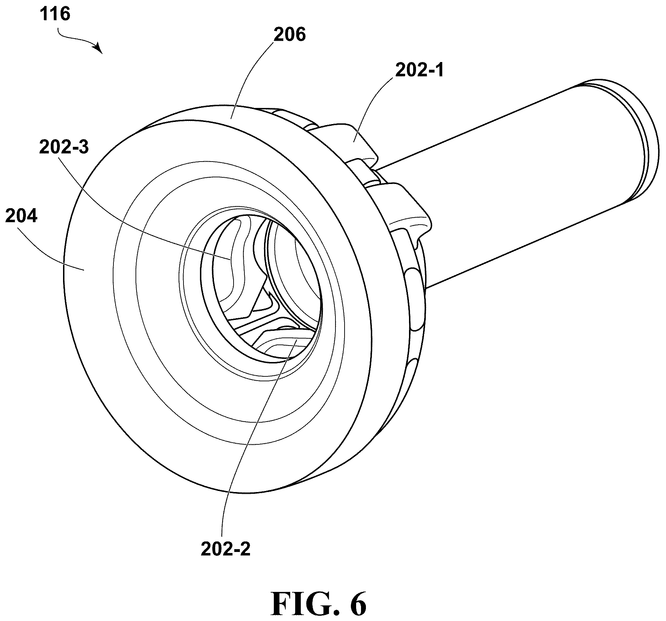

The jaw cage 204 includes inner probe funnel 126 at its probe-receiving end. The inner probe funnel 126 has a central hole through which the probe 108 passes to enter the jaw cavity for capture. The jaws 202 are arranged radially around the central hole behind the inner probe funnel 126. The jaws 202 (and other probe capture mechanism 116 components) may be contained entirely within the cross-sectional volume of the inner-probe funnel 126 (i.e., behind the inner probe funnel 126, such as shown in Figure 6). In particular, By the inner probe funnel 124 having a circular cross sectional volume (defined by the outer circumference of the inner probe funnel 124), the jaws 202 can be disposed behind the inner probe funnel 126 (e.g., in a radially symmetric manner). This may advantageously prevent ingress of foreign object debris and micrometeoroids and orbital debris into the jaws 202 and other internal components that may cause damage or degradation. Further, by having the jaws 202 behind the inner probe funnel 126, the probe capture mechanism 116 may be more compact, which can reduce mass and volume of the grapple system 110 and make space available for other purposes.

In some embodiments, the jaw cage 204 hosts the state sensing so that feedback is not affected by jaw 202 actuation, capture mechanism 116 retraction, or linear actuator 118 motion. This may make monitoring probe engagement during jaw 202 actuation more reliable and may reduce the risk of failed captures and jams.

The jaw carrier 206 is connected to and translated by the linear actuator 118 along the capture axis (also referred to as the translation axis). Translation of the jaw carrier 206 translates the jaws 202, which are pivotably attached to the jaw carrier 206. Translation of the jaw carrier 206 also translates jaw cage 204, which is nested in and sprung relative to jaw carrier 206 (except that the jaw cage 204 does not translate with the jaw carrier 206 in the first part of mechanism travel during retraction due to spring 208 action).

Actuation of the jaws 202 will now be described in further detail.

Prior to entering a ready-to-soft-capture state in which the jaws 202 are open, the jaws 202 may be closed. Jaws 202 closed may be a default position for the probe capture mechanism 116 when a capture operation is not being performed (e.g., in free space). The jaw actuation spring 208 forces the jaw cage 204 apart from the jaw carrier 206. When jaw cage 204 and jaw carrier 206 are separated in this manner, the bosses 216 occupy a first boss position in their respective mating slots 218. This first boss position causes the angular position of the jaws 202 to be closed.

To open the jaws 202, the jaw carrier 206 is translated by linear actuator 118 until the jaw cage 204 hits a hard stop designed to arrest jaw cage 204 forward motion. The hard stop may be a lip, groove, ridge, or the like in the interior of the end effector 102 housing. The portion of the jaw cage 204 contacting the hard stop may be referred to as a hard stop interface. The hard stop interface may be, for example, an outer rim or ridge of the inner probe funnel 126. As the jaw cage 204 hits the hard stop and the jaw carrier 206 forward motion continues, the jaw actuation spring 208 compresses, bringing the jaw carrier 206 and the jaw cage 204 together (the jaw cage 204 is depressed relative to the jaw carrier 206). As the jaw actuation spring 208 is overcome and the jaw cage 204 and jaw carrier 206 come together, the bosses 216 on the jaws 202 slide in the mating slots on the jaw cage 204. This sliding moves the bosses 216 from the first boss position (closed) in the slots 218 to a second boss position in the slots 218 (open). Movement of the bosses 216 from the first boss position to the second boss position in the slots 218 causes the jaws 202 to pivot in unison to the open position. In the open position, the probe 108 can enter far enough into the probe capture mechanism 116 to allow for capture by the jaws 202.

To then return the jaws 202 to the closed position, the jaw carrier 206 is retracted by linear actuator 118. During a first portion of jaw carrier 206 travel, the jaw cage 204 is stationary as the jaw actuation spring 208 extends. This may reduce the required "undercut" of the probe 114 head to clear the sweep of the jaws 202 as they close. As this initial retraction happens, the jaws 202 are retracting with the jaw carrier 206. Retraction of the jaws 202 causes the bosses 216 to slide in the mating slots 218 from the second boss position (open) to the first boss position (closed). Sliding of the bosses 216 to the first position in the mating slots 218 causes the jaws 202 to pivot closed. In the closed position, the jaws 202 captivate the probe 108.

By having the jaw cage 204 directly actuate the jaws 202 in this manner (through boss-slot interaction during jaw cage-jaw carrier relative movement), the risk of jaw desynchronization may be reduced.

With the jaws 202 now captivating the probe 108 (e.g., closed around the head of the probe 108), the jaw cage 204 is retracted along with the jaw carrier 206 during rigidization. During this second portion of travel, the inner probe funnel 124 retracts with the jaw carrier 206.

It should be noted that while the probe capture mechanism 116 of Figure 2 uses a spring element (jaw actuation spring 208) to provide the relative translation between the jaw cage 204 and jaw carrier 206 that directly actuates the jaws 202, in other embodiments, another type of linear actuator may be used. The linear actuator may be a passive linear actuator (such as spring 208) or an active linear actuator. An active linear actuator may be commanded to perform the biasing function provided by jaw actuation spring 208 in system 100. Regardless of whether the linear actuator is passive or active, the linear actuator applies relative force between the jaw carrier 206 and the jaw cage 204 across some axial distance of travel. Examples of linear actuators that may be used include, without limitation, hydraulic pistons, wax actuators, shape-memory alloys, gas springs, ball screws, lead screws, rack-and-pinion, etc. Using a passive linear actuator such as jaw actuation spring 208 may advantageously reduce complexity of the mechanism, which is often a driver in space applications.

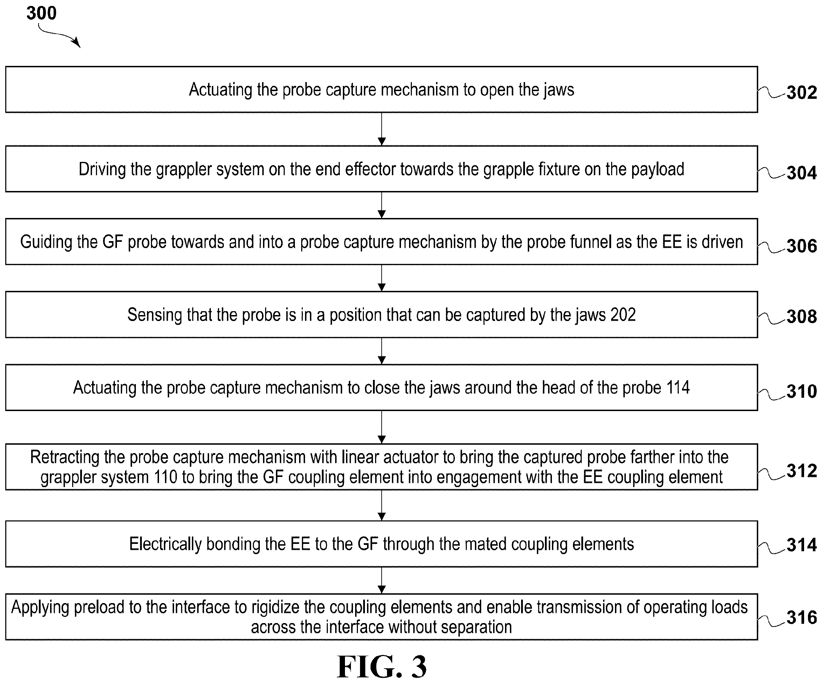

Referring now to Figure 3, shown therein is a method 300 of using the system 100 of Figure 1 to form a separable interface between end effector 102 and grapple fixture 104, according to an embodiment.

At 302, the method 300 includes actuating the probe capture mechanism 116 to open the jaws 202.

This may include translating the jaw carrier 206 forward to cause the jaw cage 204 to contact the hard stop, which compresses jaw actuation spring 208 between jaw carrier 206 and jaw cage 204, bringing the jaw cage 204 and jaw carrier 206 together. As this happens, the bosses 216 on jaws 202 slide in mating slots on the jaw cage 204 and rotate the jaws 202 to the open position.

At 304, the method 300 includes driving the grapple system 110 on the end effector 102 towards the grapple fixture 104. The end effector 102 may be driven by a robotic arm.

At 306, the method 300 includes passively guiding the probe 108 towards and into the probe capture mechanism 116 by the probe funnel 114 as the end effector 102 is driven towards the grapple fixture 104 within allowable relative misalignments. The probe 108 may rotate on a spherical bearing as required to overcome lateral misalignment of the end effector 102 relative to the grapple fixture 104.

At 308, the method 300 includes sensing that the probe 108 is in a position that can be captured by the jaws 202.

In an embodiment, this may include sensing a head of the probe 108 via a plunger disposed in the jaw cavity of the jaw cage 204. The plunger is connected to a circuit. Once the probe 108 has traveled sufficiently into the probe capture mechanism 116, the head of the probe 108 makes contact with and depresses the plunger connected to the circuit to trigger a probe present state. In some cases, further depression of the plunger may cause a second circuit to open/close, where the further depression indicates that the probe head has traveled far enough to no longer pose an interference hazard for closing the jaws 202.

At 310, the method 300 includes actuating the probe capture mechanism 116 to close the jaws 202 and captivate the probe 108.

This is achieved by retracting the jaw carrier 206 with linear actuator 118 within a first portion of travel, which causes the compressed jaw actuation spring 208 to extend and force the jaw cage 204 and jaw carrier 206 apart.

The relative translation of the jaw carrier 206 and jaw cage 204 (to separate) actuates the jaws 202 to rotate closed by means of the engagement between the bosses 216 on jaws 202 and the mating slots 218 on jaw cage 204.

The jaws 202 pivot in unison on their respective pivot pins 212 to the closed position.

In an embodiment, the closed position is achieved when adjacent flanks of adjacent jaws 202 come into flat-on-flat contact, preventing any further jaw 202 motion in the closing direction. In this state, the jaws 202 may form a continuous ring around a head of the probe 108 that prevents the jaws 202 from rotating further.

The state of the jaws 202 being fully closed around the probe 108 may be referred to as "soft capture" of the grapple fixture 104.

At 312, the method 300 includes retracting the probe capture mechanism 116 to bring the captured probe 108 farther into the grapple system 110 and the GF coupling element 106 into engagement with the EE coupling element 112.

At 314, the method 300 includes electrically bonding the end effector 102 to the grapple fixture 104 through the engaged coupling elements 106, 112.

This may include bonding one or more spring-loaded pogo pins on the EE coupling element 112 to one or more contact pads on the GF coupling element 106, or vice versa, such as described herein.

At 316, the method 300 includes applying preload to the interface to rigidize the coupling elements 106, 112 to enable transmission of manipulation loads across the interface without separation. This is achieved by continuing to tension the probe 114. Rigidization constrains the payload to which the grapple fixture 104 is attached in 6 DOF.

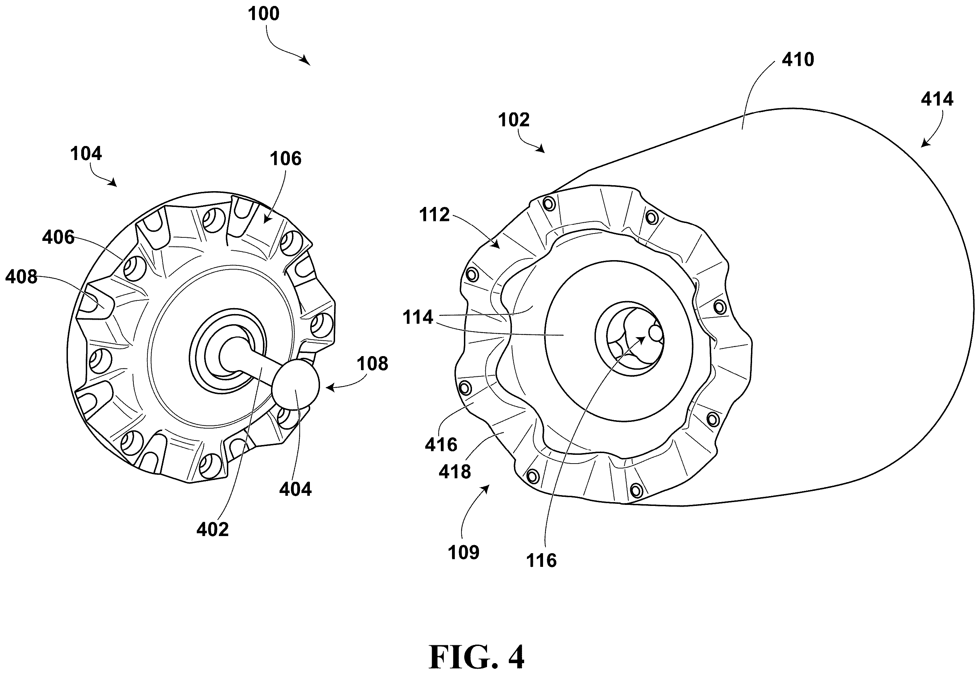

Referring now to Figures 4-11B, shown therein is an example of the separable interface system 100 of Figures 1-2, according to an embodiment. Like reference numerals represent like components.

Referring first to Figure 4, separable interface system 100 includes end effector 102 and grapple fixture 104.

Grapple fixture 104 includes coupling element 106 and probe 108. The probe 108 includes shaft 402 and head 404. The shaft 402 is spring-loaded to deflect upon contacting the end effector 102. The head 404 is hemispherical with a rounded side for sliding upon contact with the end effector 102 and a flat side for latching by the end effector 102. The coupling element 106 includes radially disposed protrusions 406 and recesses 408 (also referred to as interlocking features and crenellations herein). Side surfaces of the protrusions 406 and recesses 408 are curved to promote camming of the interface together.

End effector 102 includes coupling element 112, probe funnel 114, and probe capture mechanism 116. The probe capture mechanism 116 is enclosed within an end effector housing 410. The coupling element 112 is mounted to the housing 410 at front end 109, which is opposite rear end 414 along a capture axis (not shown). The coupling element 112 includes radially disposed protrusions 416 and recesses 418 (also referred to as interlocking features) for engaging with protrusions 406 and recesses 408 on grapple fixture 104 during capture. Like protrusions 406 and recesses 408 of GF coupling element 106, the protrusions 416 and recesses 418 of EE coupling element 112 have curved or rounded side walls to aid in bringing the coupling elements 106, 112 together under misalignment.

While the number of protrusions 406, 416 and recesses 408, 418 in Figure 4 is eight, the number in other embodiments may be two or more .

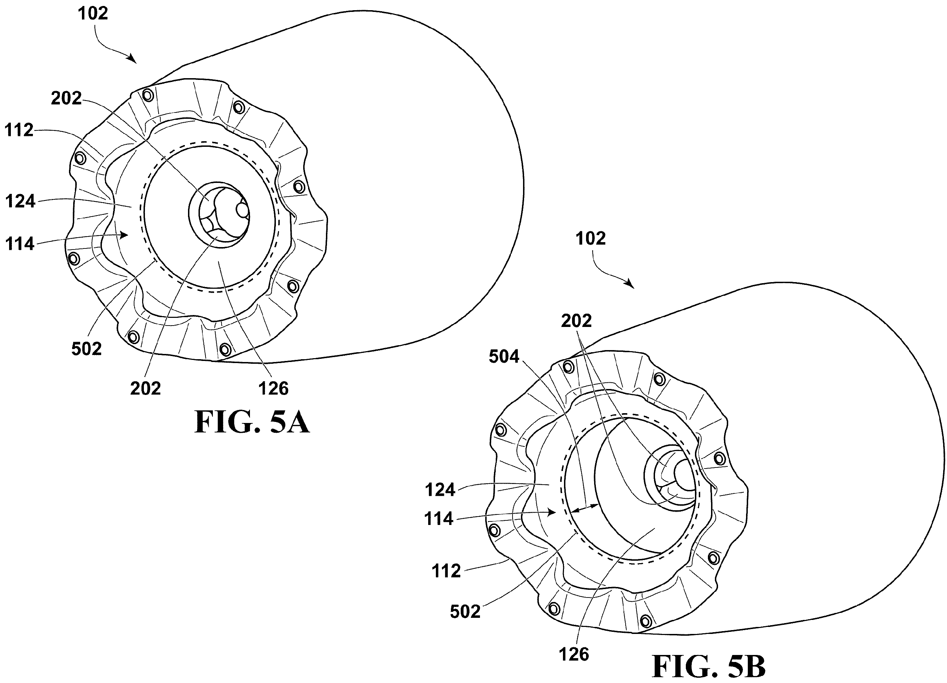

Referring now to Figures 5A-5B, the probe funnel 114 includes outer probe funnel 124 and inner probe funnel 126. Outer probe funnel 124 is stationary (and forms a central part of the coupling element 112) and inner probe funnel 126 is moveable along the capture axis. The probe funnel 114 is shown with the inner probe funnel 126 fully forward in Figure 5A (as in a ready to capture state) and with the inner probe funnel 126 retracted in Figure 5B (as in a probe captured state). It should be noted that jaws 202 are open in Figure 5A and closed in Figure 5B and that jaws 202 in Figure 5B abut one another to form a continuous ring. Dashed line 502 is used to illustrate the boundary of outer probe funnel 124 and arrow 504 is used to illustrate a gap between the outer probe funnel 124 and retracted inner probe funnel 126.

Referring now to Figures 6-11B, shown therein is the probe capture mechanism 116 of the system 100 of Figure 4 and its components in further detail, according to an embodiment.

Figure 6 is a perspective view of the probe capture mechanism 116 of Figure 4 in isolation.

Probe capture mechanism 116 includes three jaws 202-1, 202-2, 202-3 (referred to collectively as jaws 202 and generically as jaw 202), jaw cage 204, and jaw carrier 206.

The jaw cage 204 is nested within and sprung relative to the jaw carrier 206 by the jaw actuation spring (not visible). The jaws 202 are pivotably attached to the jaw carrier 206. As can be seen, the jaws 202 are behind and entirely within the cross sectional volume (or "shadow") of the inner probe funnel 126 of the jaw cage 204.

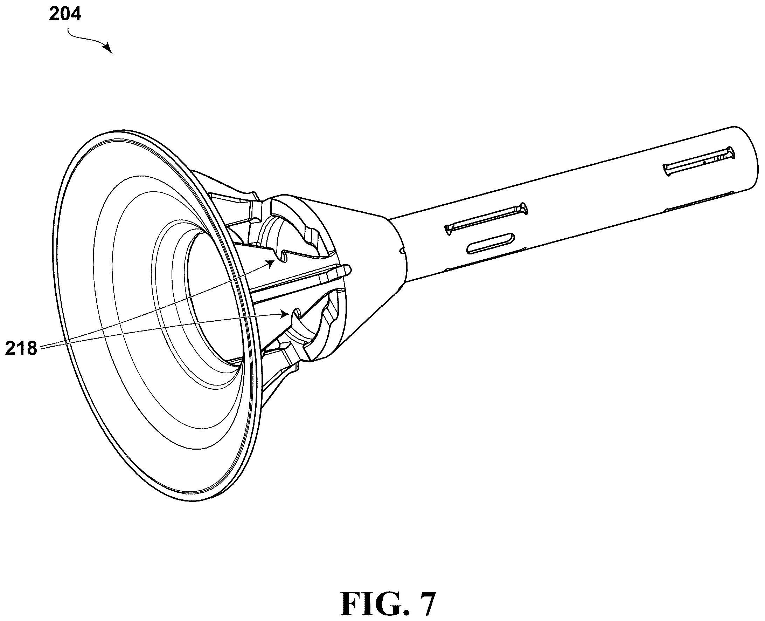

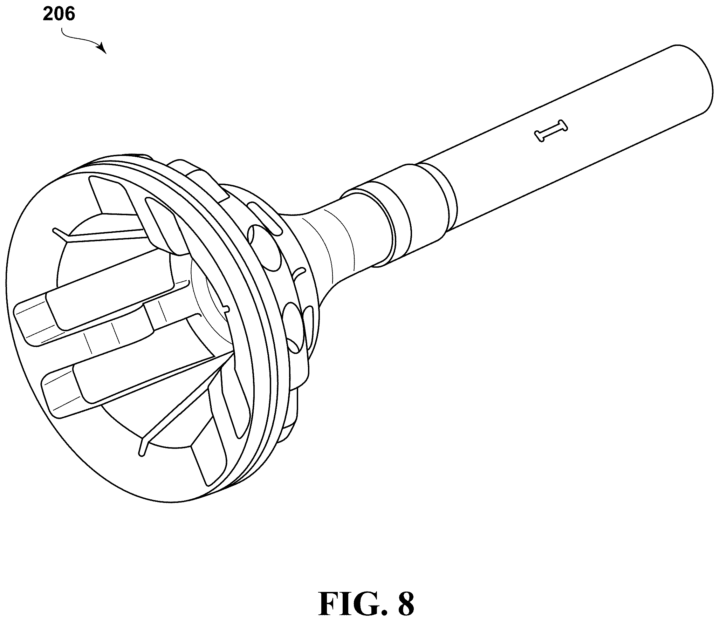

The jaw cage 204 and jaw carrier 206 are shown in isolation in Figures 7 and 8, respectively.

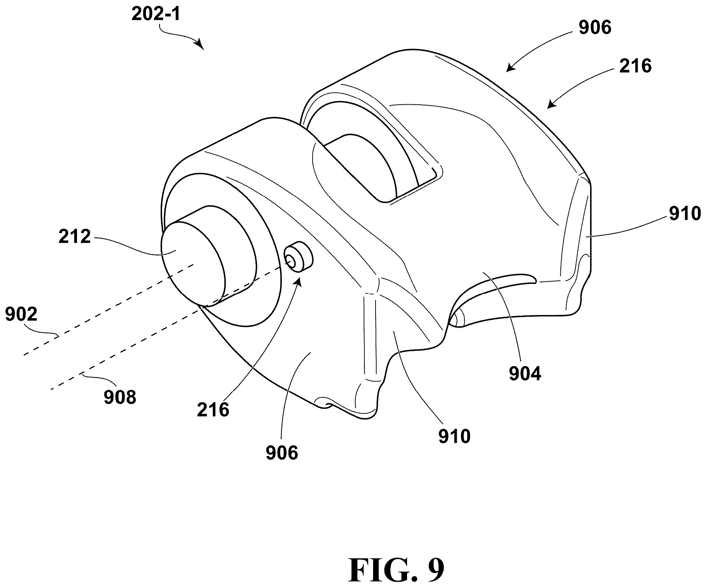

A single jaw 202-1 with pivot pin 212 is shown in isolation in Figure 9. The jaw 202-1 rotates on pivot pin 212 around rotational axis 902 ("jaw pivot axis"). The jaw 202-1 includes a capture ridge 904 that is used to contact the flat side of the probe head 404 when the jaw 202-1 is rotated to the closed position. The jaw 202-1 also includes flanks 906. The flanks 906 each include a boss 216 that slides in a mating slot in the jaw cage 204 to actuate the jaw 202 between the open and closed positions. The bosses 216 are cylindrical and coaxial. The bosses 216 are disposed on the jaw 202-1 such that they define a single boss axis 908 that is parallel to the jaw pivot axis 902. The jaw 202-1 further includes oblique surfaces 910 adjacent to flanks 906 that abut corresponding oblique surfaces on the two other jaws when the jaws 202 are closed (forming a continuous ring).

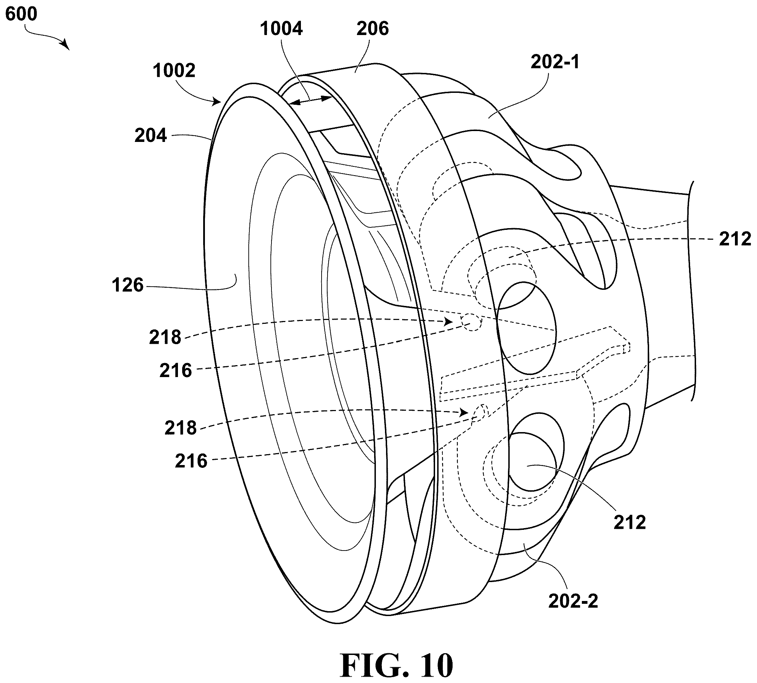

Figure 10 shows the front (probe receiving) end of the probe capture mechanism 116 of Figure 6 with the jaw carrier 206 transparent to further show the relative arrangement and interfacing of the jaws 202, jaw cage 204, and jaw carrier 206. The nested arrangement of jaw cage 204 and jaw carrier 206 can be seen, as can the pivoting attachment of the jaws 202 to jaw carrier 206 via pivot pins 212. Also visible are the bosses 216 on the flanks of the jaws 202. The bosses 216 are disposed in the mating slots 218 in the jaw cage 204. An outer ridge 1002 on the inner probe funnel 126 of the jaw cage acts as a hard stop interface to open the jaws 202, such as described herein.

In Figure 10, the jaws 202 are closed. Jaw cage 204 and jaw carrier 206 are forced apart by jaw actuation spring 208 (not visible), which is indicated by gap 1004 between jaw carrier 206 and jaw cage 204. The translation of the jaw carrier 206 relative to jaw cage 204 has caused bosses 216 on jaws 202 to slide in the mating slots 218 on jaw cage 204 and actuate the jaws 202 closed.

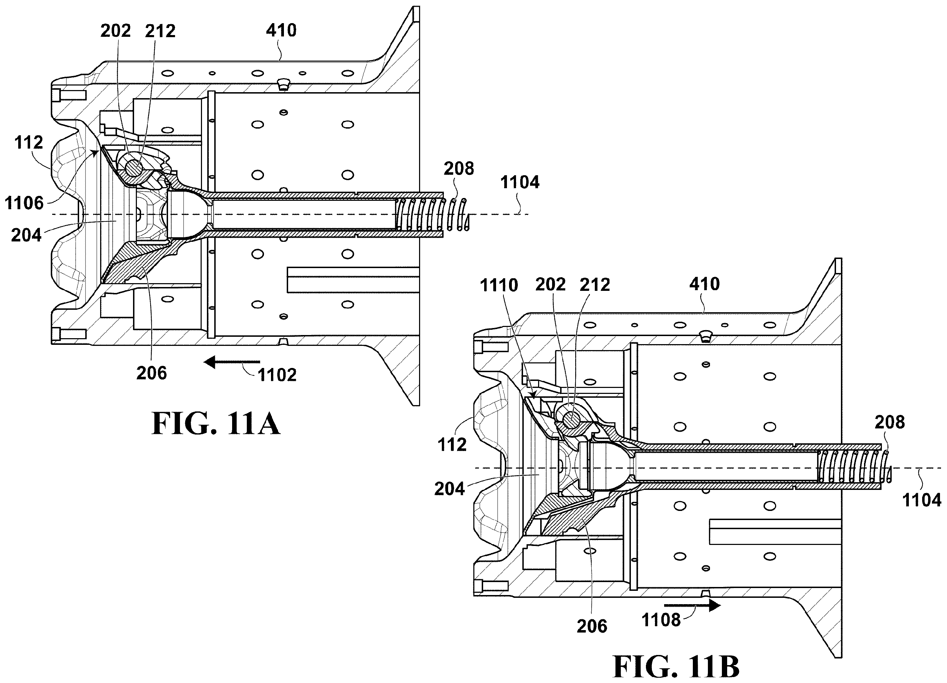

Referring now to Figures 11A-11B, shown therein is a cross sectional side view of the end effector 102 of Figure 4 with the jaws 202 in the open position (Figure 11A) and closed position (Figure 11B).

In Figure 11A, the jaw carrier 206 has been translated in direction 1102 along capture axis 1104. During this motion, the front end of jaw cage 204 contacts a jaw cage hard stop 1106 on the end effector housing 410. The hard stop 1106 may be a ridge, lip, edge, rim, or any surface sufficient to arrest the motion of jaw cage 204 in direction 1102. The motion of jaw carrier 206 continues in direction 1102 to compress jaw actuation spring 208 and bring the jaw cage 204 and jaw carrier 206 together. This sliding of jaw carrier 206 relative to the jaw cage 204 causes actuation of the jaws 202 to the open position via sliding interaction of the bosses on the jaws 202 in the mating slots on the jaw cage 204.

In Figure 11B, the jaw carrier 206 has been translated in direction 1108. During this retraction of jaw carrier 206, the previously compressed jaw actuation spring 208 extends and separates the jaw cage 204 and jaw carrier 206. This separation can be seen at gap 1110, which is closed in Figure 11A. This retraction of the jaw carrier 206 relative to the jaw cage 204 (which is stationary during this portion of movement) causes actuation of the jaws 202 to the closed position via sliding interaction of the bosses on the jaws 202 in the mating slots on the jaw cage 204.

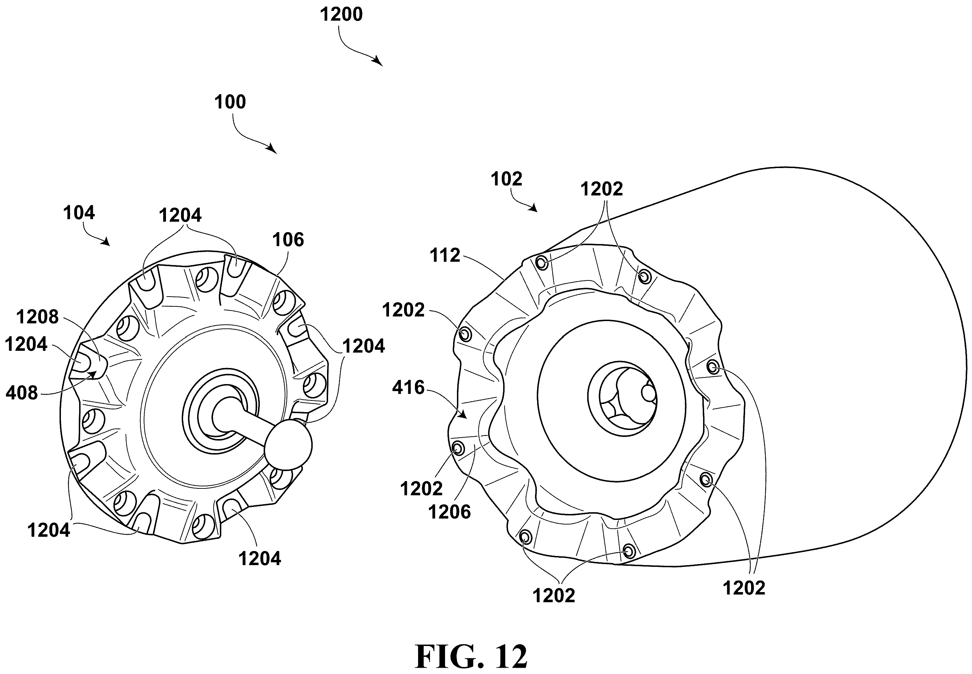

Referring now to Figure 12, shown therein is a system 1200 for electrical bonding across the separable interface system 100 of Figure 4, according to an embodiment.

The system 1200 is used to perform electrical bonding across the separable robotic interface to protect against erosion and electromagnetic interference due to electrostatic discharge. The system 1200 may be used wherever electrical power or signals need to be transmitted across a separable robotic interface.

The system 1200 may be used to achieve a class S bond, a class R bond, or class H bond (with reference to NASA Standard 4003).

The system 1200 may also be used to transfer electrical signals and/or power across the interface.

The system 1200 includes at least one pogo pin 1202 and at least one prepared contact pad 1204. In the embodiment of Figure 12, the number of pogo pins 1202 and contact pads 1204 is eight. In other embodiments, the number of pins 1202 and contact pads 1204 may vary and is not particularly limited.

The pogo pins 1202 are on the end effector 102 and the contact pads 1204 are on the grapple fixture 104. In other embodiments, the pogo pins 1202 may be on the grapple fixture 104 and the contact pads on the end effector 102. Having the pogo pins 1202 on the end effector 102 may advantageously allocate the more complex element (the pogo pin) to the end effector 102 and the less complex element (the contact pad) to the grapple fixture 104. Because there are usually many more grapple fixtures than there are end effectors, this particular arrangement minimizes overall complexity and therefore cost of the separable interface system 100.

In an embodiment, the pogo pin 1202 is a rolling pogo pin. Rolling pogo pins are a special type of pogo pin where the electrical contact element not only translates and/or rotates about the translation axis, but is also able to roll (rotate) about any other axis. The functionality of the rolling pogo pins may advantageously reduce wear due to relative lateral motion and roll of coupling grappling.

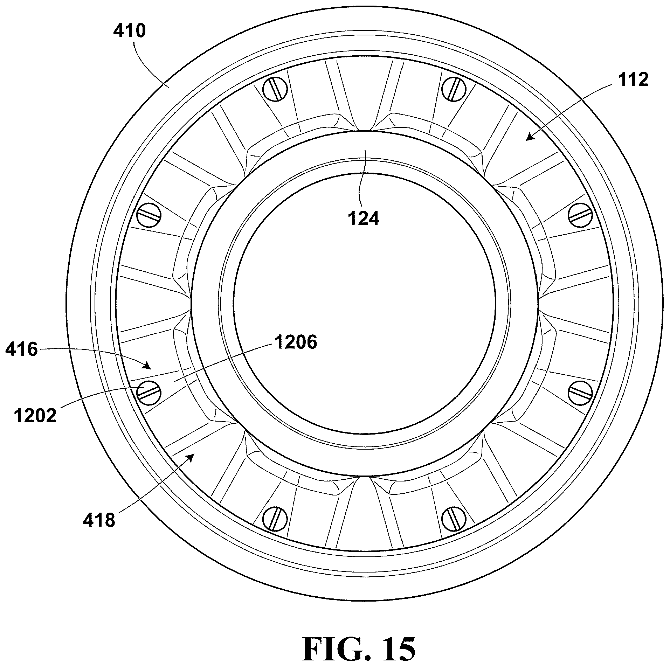

Each pogo pin 1202 is integrated into a protrusion 416 on the EE coupling element 112. The positioning of the pogo pins 1202 on the EE coupling element 112 is further shown in Figure 15, which is a front end view of the EE coupling element 112 on the EE housing 410. In particular, the pogo pin 1202 may be integrated into a distal flat surface 1206 ("distal flat") of the protrusion 416. Each contact pad 1204 is integrated into a recess 408 on the GF coupling element 106. In particular, the contact pad 1204 may be disposed on a proximal flat surface 1208 ("proximal flat") of the recess 408. The distal flat surfaces 1206 of the EE coupling element 112 and the proximal flat surfaces 1208 on the GF coupling element 106 do not interact during alignment and rigidization. Therefore, when disposed in the distal flat of the protrusion 416, the pogo pin 1202 is not at risk of damage by nominal coupling interaction between coupling elements 106, 112.

While the embodiment of Figure 12 has one pogo pin per protrusion 416, this configuration may vary in other embodiments. For example, the total number of pogo pins 1202 may be less than, equal to, or greater than the number of protrusions 416. The number of pogo pins 1202 per protrusion 416 may also vary. For example, a given protrusion 416 may have a single pogo pin 1202, multiple pogo pins 1202, or no pogo pins 1202 (where the coupling element 112 includes at least one pogo pin 1202).

The pogo pin 1202 includes a spring-loaded plunger that provides a contact surface that is slightly proud of the distal flat of the protrusion 416. In the case of a rolling pogo pin, the contact surface is a rolling ball. The protrusions 416 advantageously provide depth that can be leveraged to package the springs and spring-loaded cartridges of the pogo pins 1202 (i.e., the length of the pogo pin). The contact pads 1204 are integrated into respective proximal flats of the recesses 408 on the GF coupling element 106. The GF crenellations 406, 408 and EE crenellations 416, 418 are aligned and brought into controlled mutual contact during coupling 106, 112 engagement.

When the coupling elements 106, 112 are mated, the spring-loaded plunger of the pogo pins 1202 make contact with the prepared pads 1204. The springs inside the pogo pins 1202 are compressed a controlled amount to create a reliable electrical bond that can accommodate thermal and manufacturing variation across grapple fixtures 104. The spring-loaded plunger of the pogo pin maintains sufficient contact pressure across coupling misalignment and thermoelastic distortion conditions to achieve the required bond quality. The compression of the spring may be tuned to match an amount of relative movement expected between the grapple fixture 104 and the end effector 102 during rigidization. This may help establish a reliable bond and avoid compression or under-compression.

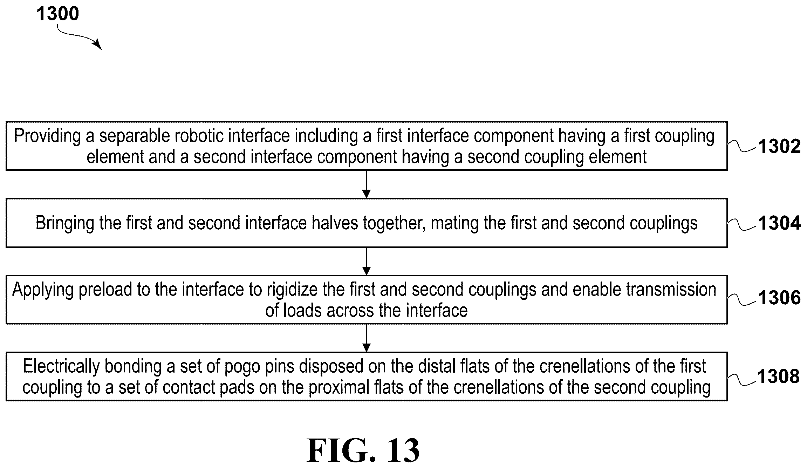

Referring now to Figure 13, shown therein is a method of electrical bonding across a separable interface in space, according to an embodiment. The separable interface may be a separable robotic interface where at least one of the interface halves is robotic. In variations, the separable interface may be an interface between an end effector and a grapple fixture, a hold down and release mechanism, a free flyer push-off system for a launch vehicle, or a berthing mechanism (e.g., a fixed end effector connected directly to a host spacecraft that is used for berthing equipment).

The method 1300 may be performed using the system 1200 of Figure 12. The method 1300 may also be used to transmit electrical signals and/or power.

At 1302, the method 1300 includes providing a separable interface system including a first interface half (first interface component) and a second interface half (second interface component) configured to form a separable interface.

The first interface component includes a first coupling element and the second interface component includes a second coupling element. The first and second coupling elements are each crenellated with respective protrusions and recesses configured to mate with the other coupling element. The crenellations provide a structural function to the separable interface, namely reacting sheer and bending moments when mated.

At 1304, the method 1300 includes bringing the first and second components together, mating the first and second coupling elements.

At 1306, the method 1300 includes applying preload to the interface to rigidize the mated first and second coupling elements to enable transmission of loads across the interface.

At 1308, the method 1300 includes electrically bonding a set of pogo pins disposed on distal flats of the crenellations of the first coupling element to a set of contact pads on proximal flats of the crenellations of the second coupling element. The pogo pins may be rolling pogo pins.

While the above description provides examples of one or more apparatus, methods, or systems, it will be appreciated that other apparatus, methods, or systems may be within the scope of the claims as interpreted by one of skill in the art.

## Claims

1. A system for capturing a grapple fixture as part of a separable robotic interface, the system comprising:
a probe capture system for grappling a probe of the grapple fixture, the probe capture system comprising:
a pair of concentric nested components including an outer nested component and an inner nested component disposed in the outer nested component;
a linear actuator that biases the outer nested component and the inner nested component apart;
at least two jaws for grappling the probe, the at least two jaws configured to pivot between open and closed positions;
a jaw actuation mechanism including at least one boss on each jaw and a mating slot for each boss on the inner nested component;
wherein the relative translation of the inner and outer nested components via the linear actuator moves the bosses in the slots, and wherein the movement of the bosses in the slots provides two degrees of freedom to pivot the at least two jaws between the open and closed positions.

2. The system of claim 1, further comprising a probe funnel for guiding the probe into the probe capture system, wherein the probe funnel includes an inner probe funnel that retracts with the probe capture system during rigidization of the grapple fixture.

3. The system of claim 2, wherein the at least two jaws are contained behind and entirely within an outer circumference of the inner probe funnel.

4. The system of claim 1, wherein the linear actuator is a spring element.

5. The system of claim 4, wherein the spring element is disposed in the outer nested component.

6. The system of claim 1, wherein the at least one boss is cylindrical.

7. The system of claim 1, wherein the at least one boss comprises a plurality of bosses and the plurality of bosses are coaxial.

8. The system of claim 7, wherein the plurality of bosses are disposed on a single boss axis that is parallel to a jaw pivot axis around which the respective jaw pivots.

9. The system of claim 1, further comprising a second linear actuator configured to retract the probe capture system and captured probe along a translation axis to bring a first coupling element on the grapple fixture into contact with a second coupling element on the end effector to form a rigid mechanical connection between the end effector and the grapple fixture.

10. The system of claim 9, wherein the first coupling element includes a first set of protrusions and recesses and the second coupling elements includes a second set of protrusions and recesses, the first and second sets of protrusions and recesses configured to mate with each other to abut and arrest any rotation between the first and second coupling elements.

11. The system of claim 10, wherein the first and second sets of protrusions and recesses are curved to promote self-alignment of the first and second coupling elements during mating.

12. The system of claim 1, further comprising at least one pogo pin disposed in a protrusion of the second set of protrusions and recesses and at least one contact pad disposed in a recess of the first set of protrusions and recesses, the pogo pin and the contact pad configured to form an electrical bond when in contact during mating of the first and second coupling elements.

13. The system of claim 1, wherein the at least two jaws is at least three jaws and the at least three jaws are arranged is a radially symmetrical manner around a volume that the probe enters for capture.

14. The system of claim 13, wherein when the at least three jaws rotate closed, flanks on adjacent jaws abut one another and form a continuous ring.

15. The system of claim 1, wherein the outer nested component controls radial alignment of the at least two jaws, orientation of the at least two jaws in two degrees of freedom, and axial alignment of the at least two jaws.
